# EUROPEAN PATENT APPLICATION

(11) **EP 3 528 504 A1**
(43) Date of publication of application: **21.08.2019**
(21) Application number: 19156429.3
(22) Date of filing: 11.02.2019
(51) Int. Cl.: H04N 21/4223, G06F 3/01, G06F 3/0484, H04N 21/431, H04N 21/442, G02B 27/00, G06K 9/00

(54) **IMAGE PROCESSING APPARATUSES AND METHODS**

(30) Priority: 16.02.2018 GB 201802533
(71) Applicant: Sony Corporation, Tokyo 108-0075 (JP); Sony Europe Limited, Weybridge, Surrey KT13 0XW (GB)
(72) Inventor: HAWKE, Edward, Southampton, SO16 6PT (GB)
(74) Representative: D Young & Co LLP

(57) **Abstract**

An image processing apparatus comprising: display circuitry configured to control a display to simultaneously display a plurality of images associated with an event; eye tracking circuitry configured to track the position of at least one eye of a user viewing the displayed plurality of images; and a processor circuitry configured to perform a predetermined operation associated with one of the plurality of images in accordance with the tracked position of the eye of the user.

## Description

### BACKGROUND

### Field of the Disclosure

The present disclosure relates to image processing apparatuses and methods.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

In recent years, video technology has made it possible to view video images captured by one or more cameras in real time and to perform operations on those images. This has found applications in various industries, including live event broadcasting, film and television production and the like.

A development making use of such video technology is to help provide improved refereeing in sporting events such as soccer and rugby events. In such scenarios, individuals view the sporting event via a number of live video images captured by one or more cameras. In one example, several video images captured by different respective cameras are presented to the individual simultaneously, thereby allowing events occurring during the sporting event to be seen from several different fields of view at the same time. This allows certain events which would otherwise be difficult for a physically-present referee to recognise to be recognised more easily. Furthermore, the video images provided from each camera may be recorded, thereby allowing the individual to replay events which have already occurred. These arrangements help refereeing decisions to be made correctly, thereby helping to enable the rules of the sporting event concerned to be applied correctly and fairly. An example of this technology is the use of a video assistant referee (VAR) in soccer.

A problem presented by the use of the above-mentioned video technology, however, relates to how to allow a user to manage the various video images which are displayed and to perform the necessary operations on those images in a quick and easy manner. Furthermore, for applications such as video refereeing (as mentioned above), when the individual viewing the video images (e.g. the VAR in soccer) is presented with a plurality of video images captured in real time by a plurality of different respective cameras, it can be difficult for the individual to review each of the video images and to perform necessary operations associated with the video images whilst keeping their attention on the events occurring in those images. For example, if a conventional user interface such as a touch screen, computer mouse or the like is used to perform the necessary operations, the individual may be forced to remove their gaze from the screen on which the video images are displayed in order to carry out operations using this conventional user interface. The operation of the user interface may also distract the attention of the individual, even if they do not take their gaze away from the screen. The individual may therefore miss an important event which occurs during the sporting event. Furthermore, there is a need to be able to train and asses the performance of such individuals in their ability to recognise events during the sporting event based on the displayed video images.

There is a need to alleviate the above-mentioned problems.

### SUMMARY

The present disclosure is defined by the claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically shows an image processing apparatus 100;
Figure 2 schematically shows an example of a display 103 which simultaneously displays a plurality of images;
Figures 3A and 3B schematically show a first example of a predetermined operation which may be performed in accordance with a tracked position of a user's eyes;
Figures 4A and 4B schematically show an example of notification of a camera operator;
Figures 5A and 5B schematically show a second example of a predetermined operation which may be performed in accordance with a tracked position of a user's eyes;
Figures 6A and 6B schematically show a third example of a predetermined operation which may be performed in accordance with a tracked position of a user's eyes;
Figures 7A to 7D schematically show a fourth example of a predetermined operation which may be performed in accordance with a tracked position of a user's eyes;
Figures 8A and 8B schematically show a fifth example of a predetermined operation which may be performed in accordance with a tracked position of a user's eyes;
Figure 9 shows a flow chart schematically illustrating a first example method;
Figure 10 shows a flow chart schematically illustrating a second example method;
Figure 11 shows a flow chart schematically illustrating a third example method;
Figure 12 shows a flow chart schematically illustrating a fourth example method; and
Figure 13 shows a flow chart schematically illustrating a fifth example method.

### DESCRIPTION OF THE EMBODIMENTS

Referring now to the drawings, wherein like reference numerals designate identical or corresponding parts throughout the several views.

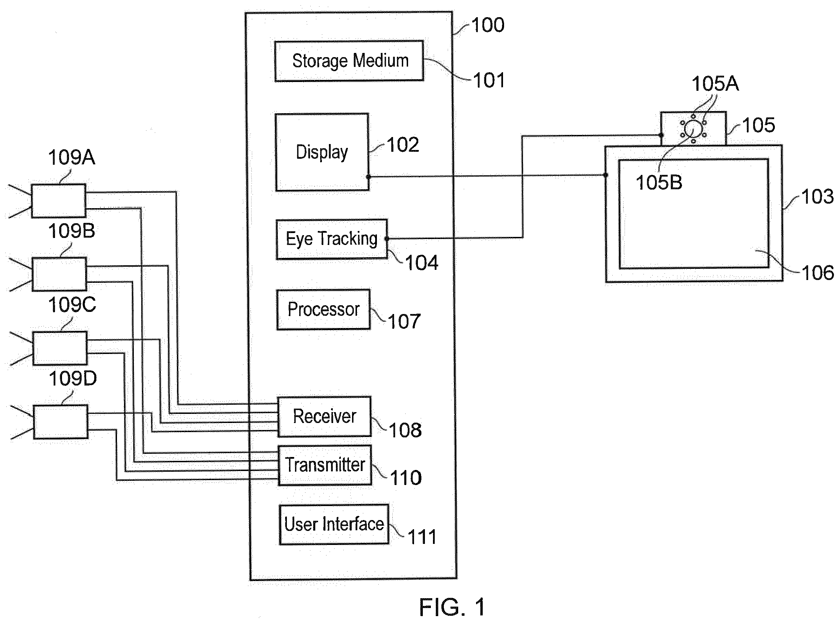

Figure 1 shows an image processing apparatus 100 according to an embodiment of the present technique. The image processing apparatus 100 comprises a storage medium 101 (such as a hard disk drive, solid state memory or the like) for storing digital information. The image processing apparatus comprises a display module 102 configured to control a display 103 to display one or more images associated with an event. In this case, the display 103 is an LCD (Liquid Crystal Display) display on which the images associated with the event are displayed. It will be appreciated that other types of display 103 may be used to display the images. In an embodiment, the one or more images displayed on the display 103 are associated with a sporting event and an individual views the images in order to assist with refereeing the sporting event. It is noted that, in this description, when the term "images" is used, this should be understood to mean "one or more images". In embodiments, each of the one or more images is a moving image (video image) comprising a plurality of consecutively displayed image frames. It will be appreciate, however, that the principles described may also be applied to still images, where appropriate.

The image processing apparatus 100 comprises an eye tracking module 104 configured to track the position of an eye of a user viewing the displayed images. The eye tracking module 104 may use any suitable technique for tracking the eye position of the user viewing the display 103 (the user being a VAR, for example). In this example, the eye tracking module 104 is in communication with a pupil centre corneal reflection (PCCR) unit 105 which collects data for use by the eye tracking module 104 in determining the user's eye position. It will be appreciated that, although a PCCR unit is used in this example, the eye tracking module 104 may track the eye position by receiving a signal indicative of the eye position from any suitable device configured to detect the position of an eye of the user.

The PCCR unit and eye tracking module 104 operate according to known principles of eye tracking. In particular, the PCCR unit 105 comprises a plurality of infrared (IR) or near-IR light sources 105A and a camera 105B. The eye tracking module 104 controls the IR (or near-IR) light sources 105A to illuminate the eyes of the user viewing the display 103 with IR (or near-IR) light. The eye tracking module 104 then controls the camera 105B to capture an IR (or near-IR) video image of the user's eyes. Using the video image captured by the camera 105B, the eye tracking module 104 is able to determine the direction of the user's gaze (that is, the point in space at which the user is looking) by determining the position of the centre of a pupil of each of the user's eyes and the position of the infrared corneal reflection on each of the user's eyes (both the pupil centre and corneal reflection of each eye being detectable from the video image captured by the camera 105B). The direction of the user's gaze is then determined based on the vector between the pupil centre and the position of the corneal reflection of each eye.

Prior to use of the image processing apparatus 100 (e.g. prior to the sporting event in which the individual must view the displayed images), the eye tracking module 104 will have been calibrated so as to map predetermined positions of the gaze of the user with respective positions on a screen 106 of the display 103. For example, when the display 103 is an LCD display or the like in which images on the screen 106 are displayed by way of a plurality of pixels, each different detectable gaze position of the user may be mapped to a respective pixel or group of pixels of the screen 106. Thus, after this calibration, the eye tracking module 104 is able to determine the portion of the screen 106 at which the user is looking based on the user's gaze direction determined from the video image captured by the camera 105B. The principles of eye tracking using PCCR and the necessary calibration involved are known in the art, and will therefore not be discussed in further detail here.

The image processing apparatus 100 comprises a processor 107 configured to perform a predetermined operation associated with the images displayed on the display 103 in accordance with the tracked position of the eyes of the user. Various examples of such predetermined operations are discussed later on. The processor 107 also controls the operation of each of the other components of the image processing apparatus 100 to implement the functionality of the present technique.

The image processing apparatus 100 furthermore comprises a receiver 108 configured to receive an image signal from each of a plurality of cameras 109A-109B and a transmitter 110 configured to transmit a notification signal to each of the plurality of cameras 109A-109D.

The image processing apparatus 100 furthermore comprises a user interface 111 configured to receive a predetermined input from the user. The user interface may comprise, for example, a touchscreen, one or more physical buttons or switches or any other suitable arrangement for allowing a user to input a command to the image processing apparatus 100.

In the example of the image processing apparatus shown in Figure 1, the display module 102 performs data communication with the display 103, the eye tracking module 104 performs data communication with the PCCR unit 105 and the receiver 108 and transmitter 110 perform data communication with each of the cameras 109A-109D. In each of these cases, the data communication may occur via any suitable wired or wireless connection, as known in the art.

In an embodiment, each of the display module 102, eye tracking module 104, processor 107, receiver, transmitter 110 and user interface 111 may be implemented using appropriate circuitry, for example. It will be appreciated that the functionality of these components may be provided in various different ways, for example using a single suitably programmed computer, or suitably configured application-specific integrated circuit(s) / circuitry.

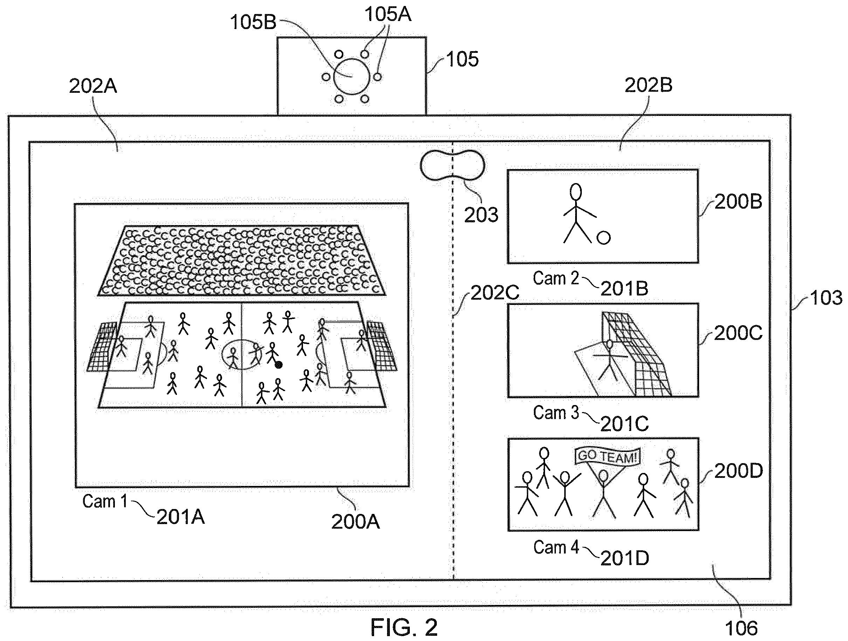

Figure 2 shows an example of the display 103 when the screen 106 of the display 103 simultaneously displays a plurality of images 200A to 200D. In this example, the viewer of the display 103 is a VAR. In this example, the image 200A has been captured by and received as an image signal from camera 109A, image 200B has been captured by and received as an image signal from camera 109B, image 200C has been captured by and received as an image signal from camera 109C and image 200D has been captured by and received as an image signal from camera 109D. In this case, the event concerned is a soccer game and each of the images 200A to 200D represent a different respective real time (that is, live or substantially live) video image of the soccer game captured over a different respective field of view (each of the cameras 109A to 109D being positioned so as to have a different respective field of view of the soccer game). It can be seen that each of the images 200A to 200D is shown with a respective label 201A to 201B indicating to the viewer a number of the camera capturing that image (in this case, camera 109A is denoted "Cam 1", camera 109B is denoted "Cam 2", camera 109C is denoted "Cam 3" and camera 109D is denoted "Cam 4"). This allows the viewer to easily identify the image associated with each camera. It is noted that each of the images 200A to 200D is a real time, live video image of the soccer game captured by a respective one of the cameras 109A to 109D. That is, each image is a real time reproduction of the events happening in the soccer game as visible in the field of view of the camera with which that image is captured. This allows the VAR to view the soccer game in real time from a plurality of different fields of view simultaneously, thereby providing the VAR with an improved view of events which occur during the soccer game.

It is noted that if the image 200A is displayed in a first area 202A (main area) of the screen 106 and the other images 200B to 200D are displayed in a second, different area 202B (preview area) of the screen 106. The main and preview areas 202A and 202B are separated by dashed line 202C. The image 200A is displayed over a larger area than the areas over which each of the images 200B to 200D are displayed. This is because the image 200A is the current selected (that is, main) image. The selected image is an image selected by the VAR on which the VAR wishes to focus their attention. It may also be the case that the image displayed in the first area 202A is an image to be distributed to an audience (e.g. via television broadcasting or via internet streaming).

In addition to displaying the images captured by the plurality of cameras 109A to 109D, the display module 102 also controls the display 103 to display an eye position indicator 203. This indicates the position on the screen 106 at which the user is looking, as determined by the eye tracking module 104 (described above). This helps the user to know which part of the screen 106 the eye tracking module 104 has detected the user as looking at and helps to facilitate the performance of predetermined operations associated with the displayed images carried out based on tracking of the user's eyes.

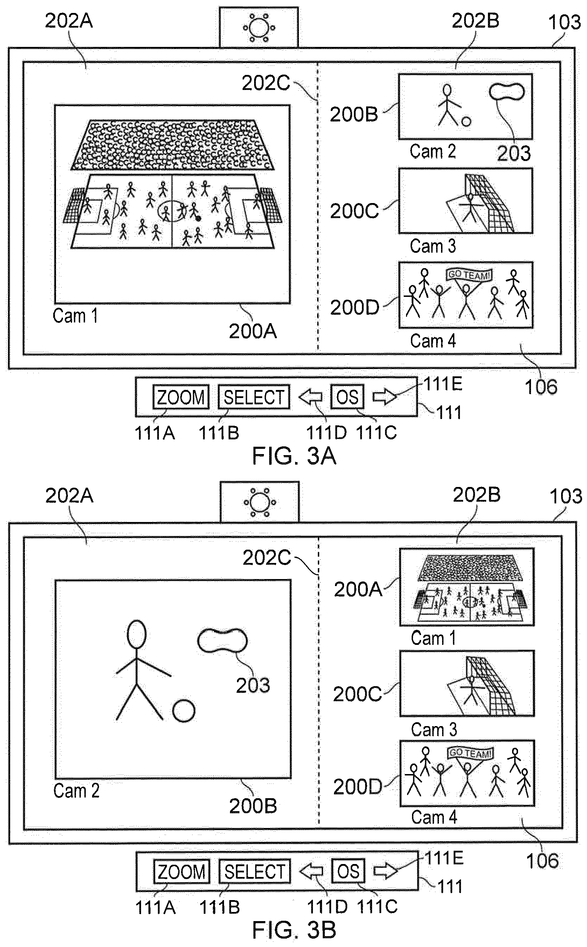

Figures 3A and 3B show a first example of a predetermined operation which may be performed in accordance with the tracked position of the user's eyes. In addition to showing the display 103, each of Figures 3A and 3B also show an example of a user interface 111. The user interface 111 in this example comprises a plurality of physical buttons which can be pressed by the VAR (or an assistant of the VAR - in an embodiment, the VAR does not operate the user interface 111 themselves but, instead, verbally instructs an assistant to operate the user interface 111 at an appropriate time) in order to perform different respective predetermined operations associated with the displayed images 200A-200D. The physical buttons include a "zoom" button 111A, a "select" button 111B, and "offside (OS)" button 111C, a left directional button 111D and a right directional button 111E. The predetermined operations associated with each of these buttons are described later on.

Figures 3A and 3B show an example embodiment in which the image to be displayed in the main area 202A is selected based on the tracked position of an eye of the user. As shown in Figure 3A, the image initially selected and therefore displayed in the main area 202A is the image 200A. However, in this case, the VAR wishes to select the image 200B to be displayed in the main area 202A instead. This may occur if, for example, the VAR has noticed a particular event occurring in the soccer game which can be seen most clearly in the image 200B or believes there is an event that is about to happen. The VAR therefore wishes for the image 200B to be displayed in the main area 202A so that the image 200B appears larger, thereby allowing the VAR to track events occurring in the image 200B more easily.

In order to select the image 200B for display in the main area 202A, the VAR turns their gaze to the image 200B (which is currently in the preview area 202B). The eye tracking module 104 recognises that the VAR is now looking at the image 200B (as indicated by the position of the eye position indicator 203). The VAR (or VAR assistant) then presses the "select" button 111B. In response to this, the image 200B at which the VAR was looking replaces the image 200A in the first area 202A. Furthermore, the image 200A is moved to the preview area 200B and is displayed at the position at which the image 200B was previously displayed. The VAR is thus able to see an enlarged version of the image 200B and is therefore able to view the event of interest more easily. Furthermore, the VAR has been able to undertake this operation simply by looking at the image they wish to view in more detail and performing a single, simple input operation (in the form of pressing "select" button 111B). The VAR is thus able to select a desired image to be viewed in the main area 202A without taking their gaze away from the screen 106. The VAR's attention on the game is therefore maintained.

In addition to the present technique allowing a VAR to be able to select an image to be displayed in the main area 202A of the screen 106 (thereby allowing a larger version of that image to be displayed to the VAR), an image may be selected using the arrangement described with reference to Figure 3 for other reasons. For example, such functionality may also be implemented in order to facilitate broadcast management of the plurality of video images.

Referring again to the examples of Figures 3A and 3B, for example, it may be the case that the image displayed in the main area 202A is an image currently being distributed to an audience (via television broadcasting, internet streaming or the like) whereas the images displayed in the preview area 202B are images which are not currently being distributed to the audience. In the distribution of video images of sporting events and the like, it is usually the case that only one video image captured by a single camera is broadcast at any given time. A broadcast manager must therefore choose which one of a plurality of simultaneously captured video images is to be broadcast at any given time. It is desirable for the broadcast manager to be able to quickly and easily change the image which is currently being broadcast. Furthermore, it is desirable for the broadcast manager to be able to quickly and easily communicate with the operators of the cameras capturing the plurality of images so that each camera operator knows whether or not the video image captured by their camera is the video image currently being broadcast. The term "broadcast" in this description should be understood to mean any arrangement by which a captured video image is distributed to an audience (e.g. through television broadcasting, internet streaming or the like).

Thus, as well as (or instead of) the user pressing the "select" button 111B in Figures 3A and 3B whilst looking at the image 200B in order to cause the image 200B to be displayed in the main area 202A in place of the image 200A, such an operation may also cause the currently broadcast image to be switched from the image 200A to the image 200B (the broadcast image is switched by a broadcast image selection apparatus (not shown), for example, which is in communication with the image processing apparatus 100 and which switches the image being broadcast based on an instruction received from the image processing apparatus 100).

In an embodiment, the switching or the broadcast image involves a two-step process. During a first step (as shown in Figure 3A), the image 200A is currently being broadcast. However, it is desired to switch the broadcast image so that the image 200B is broadcast instead of the image 200A. The broadcast manager therefore looks at the image 200B and this is detected by the eye tracking module 104 (as indicated by the position of the eye position indicator 203). In response to the eye tracking module 104 determining that the broadcast manager is looking at the image 200B, the processor 107 controls the transmitter 110 to transmit a notification signal to the camera 109B (which is capturing the image 200B). The notification signal controls the camera 109B to notify the camera operator that the image 200B being captured by that camera is to potentially be broadcast.

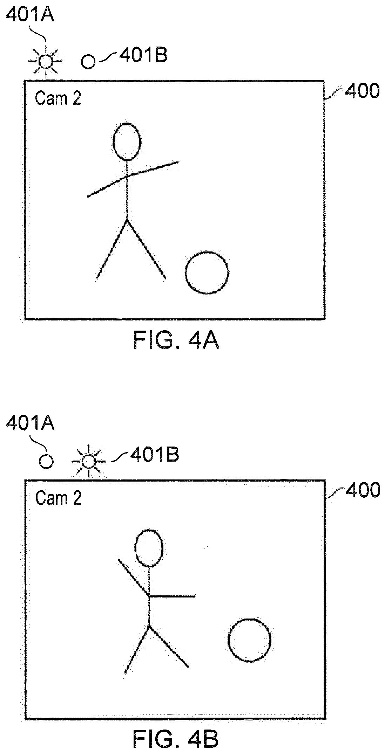

An example of such a notification is shown in Figure 4A, which shows a viewfinder 400 of the camera 109B (the camera operator looking through the viewfinder 400 in order to determine the field of view over which images are captured by the camera 109B) together with two tally lights 401A and 401B. A first tally light 401A (in a first colour, e.g. green) is for indicating to the camera operator that the video image captured by the camera 109B is to be potentially broadcast. A second tally light 401B (in a second colour, e.g. red) is for indicating to the camera operator that the video image captured by the camera 109B is currently being broadcast. Thus, when the first tally light 401A lights up, the camera operator knows that the video image captured by the camera 109B may potentially be used as the next broadcast video image. The operator may therefore take any necessary action in preparation for the image being captured by the camera 109B to be broadcast (e.g. ensuring that the camera 109B is steady, is focused on an appropriate part of the scene, etc.). Furthermore, when the second tally light 401B lights up, the camera operator knows that the video image captured by the camera 109b is the current video image being broadcast. The camera operator can thus ensure that the camera 109B position, settings and the like are selected so as to maintain a good quality broadcast video image (again, the operator may ensure that the camera 109B is steady, is focused on an appropriate part of the scene, etc.).

Each of the tally lights 401A and 401B may be light emitting diodes or other suitable lighting elements, for example. In the example of Figures 3A and 3B, when the broadcast manager looks at the image 200B, the processor 107 controls the transmitter 110 to transmit a notification signal to the camera 109B capturing the image 200B so as to cause the first tally light 401A of the camera to become illuminated. This is shown in Figure 4A. Then, once the broadcast manager presses the "select" button 111B in order to select the image 200B for broadcast, the processor 107 controls the transmitter 110 to transmit a further notification signal to the camera 109B so as to control the second tally light 401B to become illuminated (and to stop illumination of the first tally light 401A). This is shown in Figure 4B. The selection of the broadcast image and communication with the camera operators regarding the broadcast image is therefore implemented quickly and easily.

In an embodiment, in order to alleviate the occurrence of a camera operator being falsely alerted that a video image captured by their camera is to be potentially used as the next broadcast image (when this is not actually the case and, rather, the broadcast manager is only briefly looking at the video image concerned), the notification message in response to which the first tally light 401A is illuminated may be transmitted only when a particular image displayed on the screen 106 has been continuously viewed by the broadcast manager (as determined by the eye tracking module 104) for more than a predetermined period of time (for example, two, three, four or five seconds). This allows the broadcast manager to safely be able to look at each of the displayed images (for less than the predetermined period of time) shown on the screen 106 without falsely alerting a camera operators to the potential that their camera is to be used for capturing the next video image to be broadcast.

It will thus be appreciated that the selection of a particular one of a plurality of simultaneously displayed images according to embodiments of the present technique may be used for a variety of different applications.

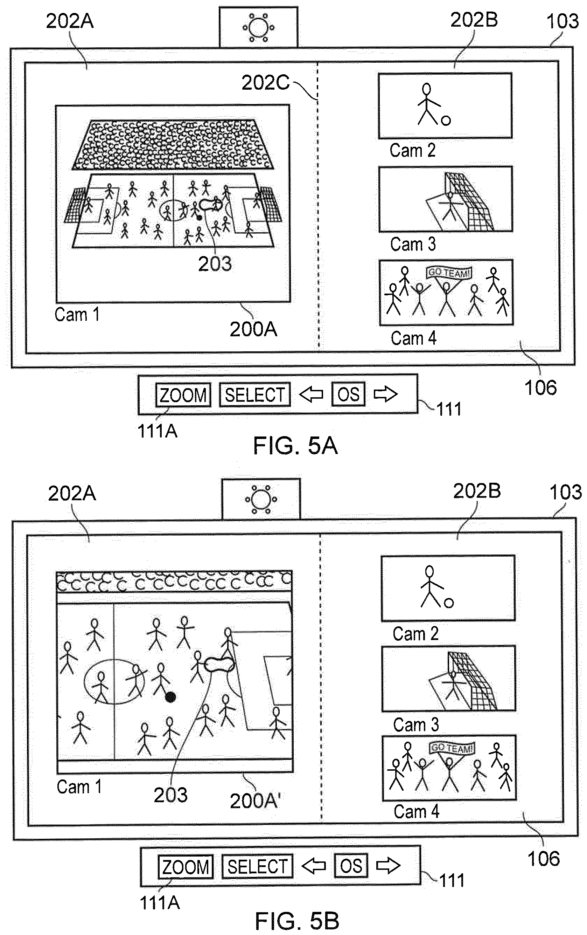

Figures 5A and 5B show another example of an operation which may be carried according to the present technique. In this example, the predetermined operation is performed on the single image 200A which is currently selected and which is therefore displayed in the main area 202A. It will also be appreciated that the following operation could be carried out if the image 200A was the only image displayed on the screen 106. The operation here is a zoom operation in which a portion 200A' of the image 200A is displayed in an enlarged form. In other words, predetermined operation comprises zooming in on a predetermined portion 200A' of the displayed image 200A.

As shown in Figure 5A, a portion of the displayed image 200A is initially selected by the user looking at that portion of the displayed image 200A, the portion of the image 200A at which the user is looking being detected by the eye tracking module 104 (and being indicated to the user by the eye position indicator 203). Once the user is looking at the portion of the image 200A in which they wish to zoom, the user, whilst still looking at the portion concerned, presses the "zoom" button 111A. As shown in Figure 5B, this results in the portion 200A' of the displayed image 200A at which the user's gaze was detected being enlarged and displayed in the region of the screen 106 in which the full, non-zoomed image 200A was originally displayed.

The user is thus able to quickly and easily zoom into a particular portion of interest of a displayed image. For example, if the user is a VAR, and an event of interest occurs at a certain point on the soccer pitch, the VAR is able to quickly and easily zoom in on the relevant portion of the soccer pitch so as to view the event in more detail. Again, since all the user has to do is to look at the point of the selected image at which the zoom operation is to be performed and to press the "zoom" button 111A, the user is able to quickly and easily perform the zoom operation and can do so without having to take their gaze away from the screen 106. In the case that a user is a VAR, this helps to ensure that important events in the soccer game are not missed by the VAR.

In an embodiment, the zooming process allows the user to iteratively change the portion of the image 200A which is shown in magnified (zoomed) form. For example, when the whole image 200A is initially displayed in the main area 202A and the user zooms in on a selected portion of the whole image (as determined by the position of the user's gaze), an initial zoomed-in portion 200A' of the image is shown in the main area 202A (as previously discussed). The user may then change the position of their gaze on the initial zoomed-in portion 200A' (as indicated by the eye position indicator 203) and, upon issuing a further "zoom" command (by again pressing the "zoom" button 111A), the initial zoomed-in portion is re-centred about the position of the user's gaze so as to produce a new zoomed-in image portion 200A'. The new zoomed-in image portion 200A' is therefore displayed in the main area 202A. This may then be repeated as many times as necessary so as to enable the user to gradually translate the zoomed-in image portion 200A' of the image 200A shown in the main area 202A. This allows a user to follow an event occurring in the whole image 200A in closer detail, even if the position in the event in the whole image 200A changes over time (e.g. as a soccer player moves to a different position on the soccer pitch).

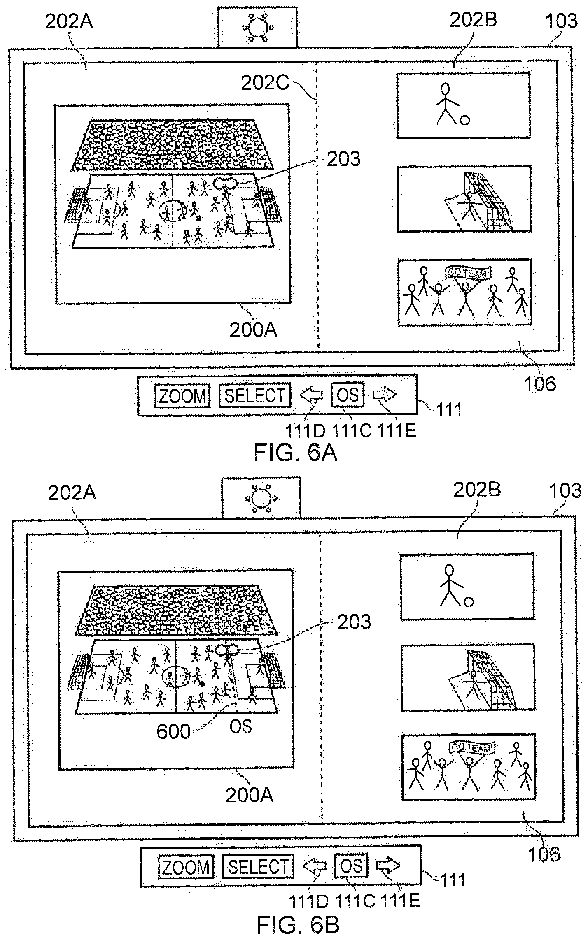

Figures 6A and 6B show another example operation which may be performed according to the present technique. In this case, the operation is the overlaying of an offside line onto the selected image 200A (which, in this case, is a wide angle image including the entire soccer pitch). An "offside line" relates to the "offside rule" in soccer and is a straight line defined across the width (shorter dimension) of the soccer pitch at a position along the length (longer dimension) of the soccer pitch at which a player becomes offside. By one definition (according to the International Football Association Board), a player is offside in soccer if they are in the opposing team's half of the field and are also nearer to the opponents' goal line than both the ball and the second-last opponent. An offside line is defined relative to the player who is offside and/or the second-last opponent, thereby facilitating determining the relative position of each of the player who is offside, the second-last opponent and the ball. In this case, as shown in Figure 6A, the VAR wishes to determine the position of the offside line relative to a particular player on the soccer pitch. The VAR therefore directs their gaze to the player in question. Again, the eye position indicator 203 indicates the direction of the user's gaze on the screen 106. In Figure 6A, it can be seen that the player with respect to whom the position of the offside line is to be defined is identified by the position of the eye position indicator 203.

When the VAR determines that they are looking at the player with respect to which the position of the offside line is to be defined, they press the "OS" button 111C. As shown in Figure 6B, this results in a digital graphic 600 indicative of the position of the offside line being overlaid on the soccer pitch shown in the image 200A. The display module 102 may determine the correct position of the digital graphic 600 representative of the offside line based on any suitable imaging technique. For example, because the soccer pitch is defined by a number of easily identifiable lines (identifiable by the processor 107 use a suitable edge detection technique as known in the art, for example) arranged in a rectangular pattern, object detection may be used to define the boundaries and plane of the soccer pitch in a virtual 3D space and the position of the digital graphic 600 indicative of the offside line (which crosses the soccer pitch along the width of the soccer pitch at a predetermined position along the length of the soccer pitch) may be determined with respect to the determined soccer pitch boundaries and plane based on the detected position of the VAR's gaze. The digital graphic 600 can then be superimposed at the correct position and orientation on the image 200A. Such image superimposing techniques are known in the art and will therefore not be described in detail here.

Once the digital graphic 600 representative of the offside line has been superimposed on the displayed image 200A, the VAR or operator (such as VAR assistant) may use the left and right directional buttons 111D and 111E to adjust the position of the digital graphic 600 in order to define the position of the offside line with respect to a scoring portion of the player with respect to which the offside line is defined. According to the rules of soccer, the offside line with respect to a player in a given half of the soccer pitch is defined by the position of the scoring portion of that player's body closest to the goal line in that half (a scoring portion of the player's body being a portion of the player's body which can be legally used to strike the soccer ball). The VAR is thus able to use the directional buttons 111D and 111E so as to adjust the position of the digital graphic 600 representative of the offside line so as to position it as accurately as possible with respect to this portion of the player's body.

In an alternative embodiment, further image processing may be carried out by the processor 107 in order to automatically determine the position of the scoring portion of the player with respect to which the offside line is defined in a given half of the soccer pitch using a suitable image analysis technique such as pose estimation or skeletal recognition (such techniques are known in the art and will therefore not be described in detail here). Once the position of this portion of the player's body has been determined, the position of the digital graphic 600 representing the offside line along the length of the soccer pitch may then be automatically adjusted so as to be aligned with the position of this portion of the player's body.

It will thus be appreciated that the VAR is able to quickly and easily estimate the position of the offside line and show the position of the offside line on the captured image by simply gazing at an appropriate point on the image concerned and pressing the "OS" button 111C. The offside line position can then be easily fine-tuned by the VAR using the directional buttons 111D and 111E and/or preconfigured image processing capability of the processor 107.

It will also be appreciated that the operation described with reference to Figures 6A and 6B could also be carried out if the image 200A was the only image displayed on the screen 106.

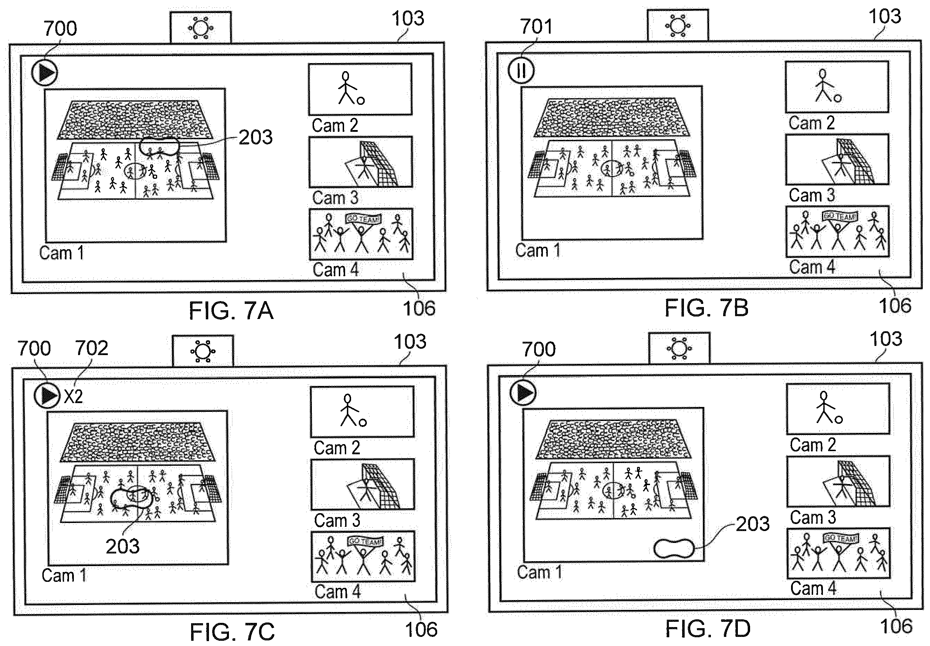

Figure 7A-7D show a further example operation which may be performed using the present technique. In this example, the eye tracking module 104 is configured to determine when the user's gaze leaves the screen 106 of the display 103 and when the user looks back at the screen 106 of the display 103. In response to determining that the user has looked away from the screen 106 (that is, the position of the user's gaze as determined by the eye tracking module 104 is determined to be at a position off the screen 106, the position of the user's gaze relative to the screen 106 having been determined during calibration), the displayed moving images are paused. This helps to ensure that, whilst the user is not looking at the screen 106, no events captured by the cameras 109A-109D are missed by the user. Then, in response to it being determined that the user has looked back at the screen 106, display of the paused, displayed moving images is resumed. In one embodiment, when the paused, displayed moving images are resumed, the moving images are displayed at a faster speed in the speed in which the moving images are displayed in real time until an elapsed time of the displayed moving images matches (that is, catches up with) an elapsed time of the live moving images of the event captured by the camera 109A-109D. In this case, images captured by the cameras 109A-109D and received as image signals by the receiver 108 are stored in the storage medium 101 whilst the user is looking away from the screen 106. When the user returns their gaze to screen 106, the moving images recorded in the storage medium 101 are played back at an increased speed until the recorded images have all been displayed and thus the displayed images can once again revert back to the real time live images captured by each of the cameras 109A-109D. Such an arrangement may be implemented using any suitable known technique for pausing real time live images via the storage of received real time image signals and for implementing subsequent playback and catch-up functions associated with those stored moving images. Such techniques are known in the art and will therefore not be described in detail here.

Figures 7A-7D follows an example of such an embodiment.

In Figure 7A, the user's gaze is directed towards the screen 106 (as indicated by the position of the eye position indicator 203) and therefore all of the images captured by the cameras 109A-109D are displayed in real time. The real time display of the images is indicated by the playback icon 700.

In Figure 7B, the user has shifted their gaze away from the screen (the eye position indicator 203 is therefore not shown on the screen). Each of the moving images is therefore paused (that is, instead of each of the displayed images being a moving image, a single frame (e.g. the most recently captured frame prior to the user turning their gaze away from the screen) of each of the moving images is continuously displayed as a still image). Because the moving images have been paused, the user does not miss any events occurring in the moving images whilst their gaze is turned away from the screen 106. The fact that each of the images have been paused is indicated by the pause icon 701.

In Figure 7C, the user has returned their gaze to the screen 106 (as indicated by the position of the eye position indicator 203, which is now once again shown in the screen 106). It is now appropriate for the moving images to be resumed. During the time in which the user was not looking at the screen 106, real time images have continued to be captured by each of the cameras 109A-109D. These have been stored in the storage medium 101 and are now played back to the user on the screen 106. The user is therefore able to continue viewing the moving images from the point at which their gaze left the screen 106. The user is thus able to view any events captured by the cameras 109-109D which occurred whilst they were looking away from the screen 106.

However, the moving images now being viewed by the user are the images which have been recorded in the storage medium 101 rather than the real time, live images currently being captured by the cameras 109A-109D. That is, if the elapsed time over which the cameras 109A-109D have been capturing images of the soccer match is t seconds, then the time elapsed for the moving images now being displayed to the user is t - tₚ seconds (tₚ being equal to the period of time for which the user's gaze left the screen 106). This is undesirable, since the user is now viewing the live soccer game with a delay of tₚ seconds. This is a particular problem if the user is a VAR, since the VAR will be delayed recognising any important events occurring in the soccer game. That is, they will only be able to recognise such events after a delay of tₚ seconds. This may negatively affect the quality of refereeing by the VAR.

In order to alleviate this problem, the moving images recorded in the storage medium 101 are played at a faster speed (that is, a faster playback rate) than the speed at which the real time images are captured by the cameras 109A-109D. This is indicated on the screen 106 by the playback icon 700 in combination with a numerical multiplier indicator 702 indicating a multiplier of the playback speed. In the example of Figure 7C, the multiplier is "x2" thereby indicating that the images stored in the storage medium 101 are being played back at twice the speed as the speed at which the real time images are captured by the cameras 109A-109D. This gradually reduces the delay time tₚ (at a rate determined by the multiplier) until, eventually, all images stored in the storage medium 101 have been displayed. At this point, tₚ = 0 and the images being captured by the cameras 109A-109D are once again be displayed on the screen 106 in real time. This is shown in Figure 7D, in which it can be seen that the playback icon 700 is once again displayed (this time, without the multiplier value).

In an embodiment, the multiplier value may be selectable by the user (using a selector (not shown) of the user interface, for example). Alternatively, or in addition, the multiplier value may be switched between a plurality of different values in dependence on at least one of the amount of catch up time required (for example, so that the multiplier value becomes larger when the delay time between the images being played back after pausing and the real time captured images is larger) and an amount of time until the end of the sporting event (for example, so that the multiplier value becomes larger when the amount of time until the end of the sporting event is smaller). This enables a suitable balance to be achieved between allowing the individual viewing the images to recognise as many events as possible in the captured images and preventing a delay time of images being played back after pausing from being too excessive.

The arrangement exemplified with reference to Figures 7A to 7D helps to ensure that the user does not miss any events occurring in the soccer game when they temporarily turn their gaze away from the screen 106.

It will also be appreciated that the operation described with reference to Figures 7A to 7D could also be carried out if only a single image (rather than a plurality of images) was captured and displayed on the screen 106.

In the example of Figures 7A to 7D, the eye tracking module 104 and/or processor 107 may determine that the user is looking away from the screen only after the user's gaze has left the screen for more than a predetermined period of time (e.g. 1 second) and/or after the user's gaze has left the screen by more than a predetermined distance (e.g. 10 centimetres). This helps prevent undesired pausing of the live images when, respectively, the user blinks and/or when the user looks away from the screen by only a small distance (and may therefore still be able to see events occurring in their peripheral vision).

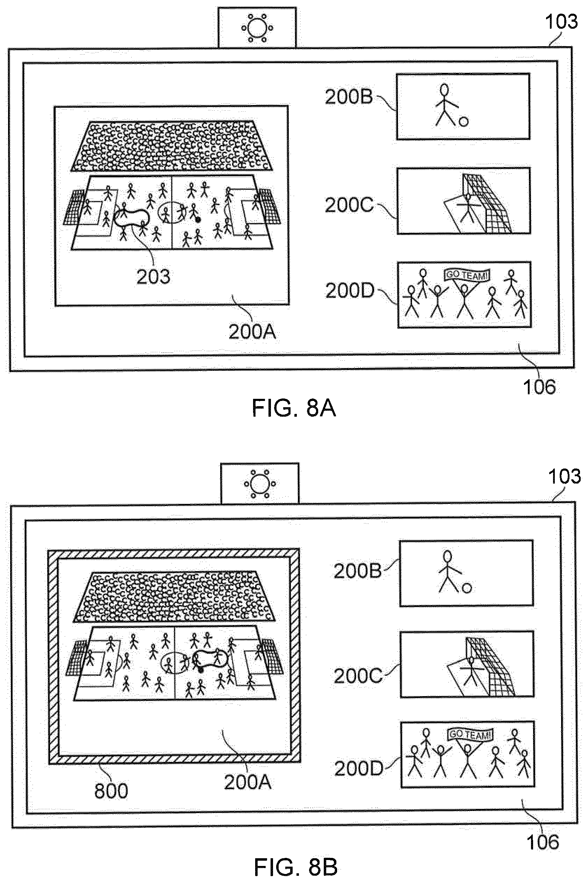

Figures 8A and 8B show a further example operation which may be performed according to the present technique.

When the user is a VAR, it is desirable for the VAR to look at each of the plurality of displayed images of the soccer game regularly so as to keep up to date with as many events happening during the game as possible. However, it is possible that the VAR may unintentionally give too much attention to one image whilst neglecting the other images. In order to alleviate this problem, the eye tracking module 104 is configured to determine when the user has been looking at one of the plurality of images 200A to 200D for more than a predetermined time period (for example, three, four or five seconds). In response to it being determined that the user has been looking at one of the plurality of displayed images for more than the predetermined time period, the processor 107 generates a signal to notify the user that they have been looking at the one of the plurality of images for more than the predetermined time period. The generated signal may, for example, control the display module 102 to control the display to display a visual indicator indicating to the user that they have been looking at the one of the plurality of images for more than the predetermined period of time. In the example of Figures 8A and 8B, the visual indicator comprises visually distinguishing the one of the plurality of images that the user has been looking at with respect to the other one or more images of the plurality of images.

In the example of Figures 8A and 8B, the user's gaze is directed at the image 200A. This is indicated by the position of the eye position indicator 203. It is desirable for the user to regularly look at the image 200A. However, it is also desirable for the user to regularly look at the other images 200B to 200D. This helps to ensure that the user is aware of all events occurring during the soccer match (in particular, since some events may only be recognisable by the VAR in certain ones of the displayed images). Thus, if the user continuously looks only at the image 200A for more than a predetermined period of time, the image 200A is visually distinguished from the other images 200B to 200D in order to alert the user to the fact that they have been looking at the image 200A for too long. In this example, as shown in Figure 8B, the image 200A is visually distinguished from the other images 200B to 200D by surrounding the image 200A with a border graphic 800.

It will be appreciated that other ways of alerting the user to the fact that they have been looking at a single one of the plurality of displayed images for too long could be used. For example, other ways of distinguishing the image concerned from the other images could be used (e.g. the image could be greyed out or the colour palette of the image could be changed in an obvious way). Alternatively, any other suitable visual message may be displayed on the screen 106. It is also envisaged that other methods of alerting the user could be used, for example, via audio or haptic feedback (implemented, respectively, by a loudspeaker (not shown) or haptic feedback generator (not shown) such as a vibrator which receive the signal generated by the processor 107).

In the embodiments described with references to Figures 2 to 8, it will be appreciated that the user interface 111 may take other suitable forms for recognising a user input indicative of the "zoom", "select" and/or "offside" operations. For example, the user interface 111 may comprise circuitry configured to analyse actions of the user in images captured by the camera 105B. For example, the user may perform the "zoom", "select" or "offside (OS)" operations by casting their gaze at a predetermined portion of the screen 106 of the display for more than a predetermined time (thus resulting in a "zoom", "select" or "OS" function being performed based on the portion of the screen 106 at which the user has been looking for the predetermined period of time), blinking a predetermined number of times (thus resulting in a "zoom", "select" or "OS" function being performed based on the portion of the screen 106 at which the user was looking when they blinked the predetermined number of times) or performing a predetermined gesture (thus resulting in a "zoom", "select" or "OS" function being performed based on the portion of the screen 106 at which the user was looking when they performed the predetermined gesture). It will be appreciated that other such commands which don't require a user to make physical contact with a user interface apparatus (such as a touch screen, buttons, switches or the like) could be used with the present technique.

It will be appreciated that any of the embodiments exemplified with reference to Figures 2 to 8 may be combined such that the functionality demonstrated by these embodiments may be applied by an individual viewing images on a single image processing apparatus 100. In particular, the embodiments of Figures 7 and 8 may be combined so as to both allow pausing of live images when the user looks away from the screen 106 and to allow the user to be alerted when they are looking at a particular one of the images for too long.

Furthermore, the processor 107 may record data indicative of the determined eye positions of the user to the storage medium 101 during the sporting event for later analysis of the performance of the user. For example, when the user is a VAR, the recorded data can be used to determine how often and for how long the user looked away from the screen 106 (thus resulting in pausing of the images) and how often the user spent too long looking at only a single one of the images (resulting in the user being alerted to this fact). This data can then be used to compare different users' ability to act as a VAR and to determine which of the users performs best (e.g. the user with the least time and/or number of instances looking away from the screen 106 and/or with the least number of instances of looking at a single image for too long may be determined as the best VAR). This data can therefore aid in VAR assessment and selection. It also enables a user to improve their performance as a VAR by them being able to determine where their weaker performance has been (for example, if the recorded data indicates that the user doesn't look away from the screen 106 very often or for very long but that they are too often getting stuck looking at only a single image, then the user will know that it is this latter skill which they need to focus on most in order to improve).

Thus, as well as the present technique allowing improve refereeing of sporting events, it may also facilitate assessment and training of individuals (such as VARs) performing this refereeing. The recorded data may also include data indicative of when, during the sporting event, the "zoom" and "select" functions were selected, thus enabling a complete record of what the individual concerned was looking at during the live sporting event. It will be appreciated that, by recording the eye positions of the user, the selected functions, etc. as determined in real time throughout the sporting event for later analysis, any suitable statistical analysis method may be used to analyse the collected data for the purposes of assessment and training. This analysis may be performed in combination with the occurrence of events during the sporting event which were determined to be of importance so as to determine the user's attention relative to these events, for example.

It will thus be appreciated that, with the present technique, operations associated with displayed images may be performed quickly and easily whilst alleviating the need for a viewer of displayed images to look away from the displayed images. This helps to ensure that events recognisable from the displayed images are not missed by the viewer. In particular, when the viewer is a VAR refereeing a sporting event such as a soccer game, the present technique helps to ensure that the VAR does not miss important events happening during the soccer game.

It will be appreciated that, although the above-mentioned examples relate to a soccer game, the present technique may be applied to a wide variety of sports (for example, rugby, tennis and hockey) which utilise VARs (or similar).

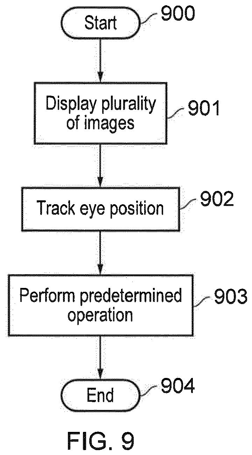

Figure 9 shows a flow chart schematically illustrating a method according to an embodiment. The method starts at step 900. At step 901, the display module 102 controls the display 103 to simultaneously display a plurality of images associated with an event. At step 902, the eye tracking module 104 tracks the position of at least one eye of a user viewing the displayed plurality of images. At step 903, the processor 107 performs a predetermined operation associated with one of the plurality of images in accordance with the tracked position of the at least one eye of the user. The method then ends at step 904.

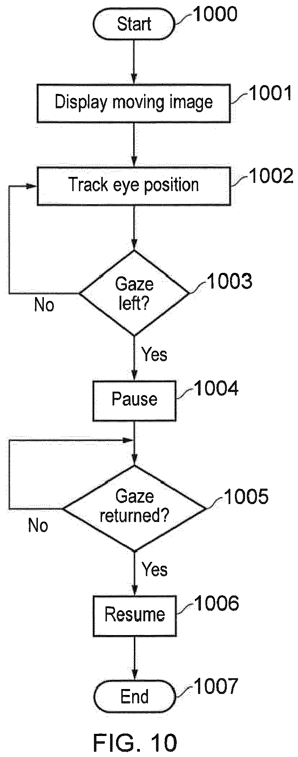

Figure 10 shows a flow chart schematically illustrating a method according to another embodiment. The method starts at step 1000. At step 1001, the display module 102 controls the display 103 to display a moving image associated with an event. At step 1002, the eye tracking module 104 tracks the position of at least one eye of a user viewing the displayed moving image. At step 1003, the eye tracking module 104 determines, based on the tracked position of the at least one eye of the user, whether the user's gaze has left the displayed moving image. In the case that the user's gaze has not left the displayed moving image, the method returns to step 1002. On the other hand, in the case that the user's gaze has left the displayed moving image, the method proceeds to step 1004. At step 1004, the processor 107 controls the display to pause the displayed moving image. At step 1005, the eye tracking module 104 then determines whether the user's gaze has returned to the displayed moving image. If the user's gaze has not returned to the displayed moving image, then the process returns to step 1005. On the other hand, if the user's gaze has returned to the displayed moving image, then the process proceeds to step 1006, in which the processor 107 controls the display to resume the paused, displayed moving image. The process then ends at step 1007.

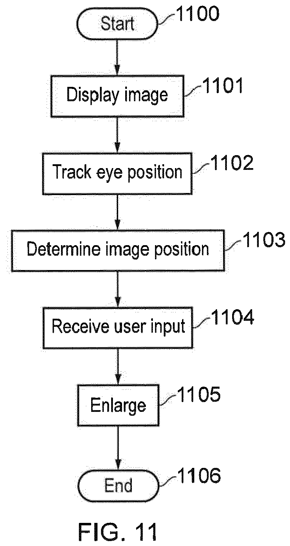

Figure 11 shows a flow chart schematically illustrating a method according to another embodiment. The method starts at step 1100. At step 1101, the display module 102 controls the display 103 to display an image associated with an event. At step 1102, the eye tracking module 104 tracks the position of at least one eye of a user viewing the displayed image. At step 1103, the eye tracking module 104 then determines, based on the tracked position of the at least one eye of the user, a portion of the displayed image at which the user is looking. At step 1104, the user interface 111 receives a predetermined user input from the user. At step 1105, in response to the user interface 111 receiving the predetermined user input from the user, the processor 107 controls the display 103 to enlarge the determined portion of the displayed image at which the user is looking. The method then ends at step 1106.

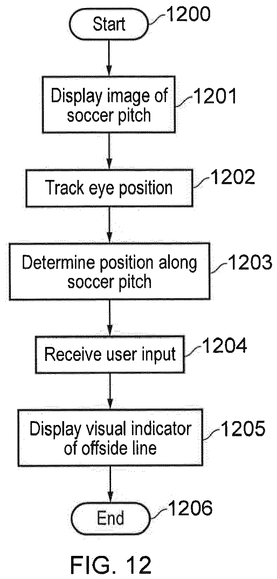

Figure 12 shows a flow chart schematically illustrating a method according to another embodiment. The method starts at step 1200. At step 1201, the display module 102 controls the display 103 to display an image of a soccer pitch. At step 1202, the eye tracking module 104 tracks the position of at least one eye of a user viewing the displayed image. At step 1203, the eye tracking module 104 determines, based on the tracked position of the at least one eye of the user, a position along the soccer pitch of the displayed image at which the user is looking. At step 1204, the user interface 111 receives a predetermined user input from the user. In response to the user interface 111 receiving the predetermined user input from the user, the processor 107 controls the display 103 to display a visual indicator of an offside line at the determined position along the soccer pitch at which the user is looking.

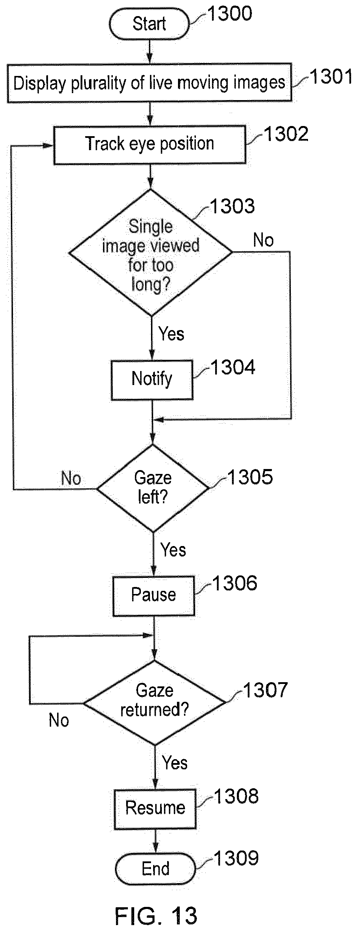

Figure 13 shows a flow chart schematically illustrating a method according to another embodiment. In particular, this embodiment relates to a combination of the embodiments described with reference to Figures 7 and 8. The method starts at step 1300. At step 1301, the display module 102 controls the display 103 to simultaneously display a plurality of live moving images of an event each captured by a respective camera in real time. At step 1302, the eye tracking module 104 tracks the position of at least one eye of a user viewing the displayed plurality of moving images. At step 1303, the eye tracking module 104 determines, based on the tracked position of the at least one eye of the user, when the user has been looking at one of the plurality of moving images for more than a predetermined time period. If it is determined that the user has not been looking at one of the plurality of moving images for more than the predetermined time period, then the process proceeds to step 1305 (without implementing step 1304). On the other hand, if it is determined that the user has been looking at one of the plurality of moving images for more than the predetermined time period, then the process first proceeds to step 1304, in which the processor 107 generates a signal to notify the user that they have been looking at the one of the plurality of moving images for more than the predetermined period of time. The process then proceeds to step 1305.

At step 1305, the eye tracking module 104 determines, based on the tracked position of the at least one eye of the user, whether the user's gaze has left the displayed moving images. In response to the eye tracking module 104 determining that the user's gaze has not left the displayed moving images, the process returns to step 1302. On the other hand, in response to the eye tracking module 104 determining that the user's gaze has left the displayed moving images, the method proceeds to step 1306, in which the processor 107 controls the display to pause the displayed moving images. At step 1307, the eye tracking module 104 determines whether the user's gaze has returned to the paused, displayed moving images. If it is determined that the user's gaze has not returned to the paused, displayed moving images, then the process returns to step 1307. On the other hand, if it is determined that the user's gaze has returned to the paused, displayed moving images, then the process proceeds to step 1308, in which the processor 107 controls the display to resume the paused, displayed moving images. The paused, displayed moving images are resumed at a faster speed than the speed at which the moving images are displayed in real time until a time at which an elapsed time of the displayed moving images matches an elapsed time of the live moving images of the event captured by the respective cameras. The process then ends at step 1307.

Various features of the present technique are defined by the following numbered clauses:
1. An image processing apparatus comprising:
   display circuitry configured to control a display to simultaneously display a plurality of images associated with an event;
   eye tracking circuitry configured to track the position of at least one eye of a user viewing the displayed plurality of images; and
   processor circuitry configured to perform a predetermined operation associated with one of the plurality of images in accordance with the tracked position of the at least one eye of the user.
2. An image processing apparatus according to clause 1, comprising user interface circuitry configured to receive a predetermined input from the user, wherein:
   the display circuitry is configured to control the display to display a first image of the plurality of images is displayed in a first area of the display and a second image of the plurality of images is displayed in a second area of the display;
   the eye tracking circuitry is configured, based on the tracked position of the at least one eye of the user, to determine a second image displayed in the second area of the display at which the user is looking; and
   in response to the user interface circuitry receiving the predetermined input from the user, the processor circuitry is configured to control the display circuitry to control the display to display the second image at which the user is looking in the first area of the display in place of the first image.
3. An image processing apparatus according to clause 1 or 2, wherein:
   the eye tracking circuitry is configured to determine, based on the tracked position of the at least one eye of the user, when the user has been looking at one of the plurality of images for more than a predetermined time period; and
   in response to the eye tracking circuitry determining that the user has been looking at one of the plurality of images for more than the predetermined time period, the processor circuitry is configured to generate a signal to notify the user that they have been looking at the one of the plurality of images for more than the predetermined period of time.
4. An image processing apparatus according to clause 3, wherein the signal controls the display circuitry to control the display to display a visual indicator indicating to the user that they have been looking at the one of the plurality of images for more than the predetermined period of time.
5. An image processing apparatus according to clause 4, wherein the visual indicator comprises visually distinguishing the one of the plurality of images that the user has been looking at with respect to the other one or more images of the plurality of images.
6. An image processing apparatus according to any preceding clause, comprising a receiver configured to receive an image signal from each of a plurality of cameras and a transmitter configured to transmit a notification signal to each of the plurality of cameras, wherein each of the displayed plurality of images is generated based on an image signal received from a respective one of the plurality of cameras; wherein:
   a first image of the displayed plurality of images is an image to be distributed to an audience;
   the eye tracking circuitry is configured, based on the tracked position of the at least one eye of the user, to determine when the user is looking at a second image of the displayed plurality of images; and
   in response to the eye tracking circuitry determining that the user is looking at the second image, the processor circuitry is configured to control the transmitter to transmit a notification signal to the camera from which the image signal on the basis of which the second image is generated is received, the notification signal being for notifying an operator of the camera that the second image generated based on the image signal received from the camera is to potentially be distributed to an audience in place of the first image.
7. An image processing apparatus according to clause 6, wherein:
   the eye tracking circuitry is configured to determine when the user has been looking at the second image for more than a predetermined time period; and
   the processor circuitry is configured to control the transmitter to transmit the notification signal to the camera from which the image signal on the basis of which the second image is received in response to the eye tracking circuitry determining that the user has been looking at the second image for more than the predetermined period of time.
8. An image processing apparatus according to clause 6 or 7, comprising user interface circuitry configured to receive a predetermined input from the user, wherein, in response to the user interface circuitry receiving the predetermined input from the user, the processor circuitry is configured:
   to control the transmitter to transmit a further notification signal to the camera from which the image signal on the basis of which the second image is generated is received, the notification signal being for notifying the operator of the camera that the second image generated based on the image signal received from the camera is to be distributed to an audience in place of the first image; and
   to control the second image to be distributed to an audience in place of the first image.
9. An image processing apparatus according to clause 1, wherein:
   each of the displayed plurality of images is a live moving image of the event captured by a respective camera in real time;
   the eye tracking circuitry is configured to track the position of the at least one eye of the user viewing the displayed moving images, the eye tracking circuitry being configured to determine, based on the tracked position of the at least one eye of the user, when the user's gaze leaves the displayed moving images and when the user's gaze returns to the displayed moving images; and
   the processor circuitry is configured, in response to the eye tracking circuitry determining that the user's gaze has left the displayed moving images, to control the display circuitry to control the display to pause the displayed moving images and, in response to the eye tracking circuitry determining that the user's gaze has returned to the paused, displayed moving images, to control the display circuitry to control the display to resume the paused, displayed moving images at a faster speed than the speed at which the moving images are displayed in real time until a time at which an elapsed time of the displayed moving images matches an elapsed time of the live moving images of the event captured by the respective cameras.
10. An image processing apparatus comprising:
   display circuitry configured to control a display to display a moving image associated with an event;
   eye tracking circuitry configured to track the position of at least one eye of a user viewing the displayed moving image, the eye tracking circuitry being configured to determine, based on the tracked position of the at least one eye of the user, when the user's gaze leaves the displayed moving image and when the user's gaze returns to the displayed moving image; and
   processor circuitry configured, in response to the eye tracking circuitry determining that the user's gaze has left the displayed moving image, to control the display circuitry to control the display to pause the displayed moving image and, in response to the eye tracking circuitry determining that the user's gaze has returned to the paused, displayed moving image, to control the display circuitry to control the display to resume the paused, displayed moving image.
11. An image processing apparatus according to clause 10:
   the displayed moving image is a live moving image of the event captured by a camera in real time;
   in response to the eye tracking circuitry determining that the user's gaze has returned to the paused, displayed moving image, the processor circuitry is configured to control the display circuitry to control the display to resume the paused, displayed moving image at a faster speed than the speed at which the moving image is displayed in real time until a time at which an elapsed time of the displayed moving image matches an elapsed time of the live moving image of the event captured by the camera.
12. An image processing apparatus comprising:
   display circuitry configured to control a display to display an image associated with an event;
   eye tracking circuitry configured to track the position of at least one eye of a user viewing the displayed image, the eye tracking circuitry being configured to determine, based on the tracked position of the at least one eye of the user, a portion of the displayed image at which the user is looking;
   user interface circuitry configured to receive a predetermined user input from the user; and
   processor circuitry configured, in response to the user interface circuitry receiving the predetermined user input from the user, to control the display circuitry to control the display to enlarge the portion of the displayed image at which the user is looking as determined by the eye tracking circuitry.
13. An image processing apparatus comprising:
   display circuitry configured to control a display to display an image of a soccer pitch;
   eye tracking circuitry configured to track the position of at least one eye of a user viewing the displayed image, the eye tracking circuitry being configured to determine, based on the tracked position of the at least one eye of the user, a position along the soccer pitch of the displayed image at which the user is looking;
   user interface circuitry configured to receive a predetermined user input from the user; and
   processor circuitry configured, in response to the user interface circuitry receiving the predetermined user input from the user, to control the display to display a visual indicator of an offside line at the position along the soccer pitch at which the user is looking as determined by the eye tracking circuitry.
14. An image processing method comprising:
   controlling a display to simultaneously display a plurality of images associated with an event;
   tracking the position of at least one eye of a user viewing the displayed plurality of images; and
   performing a predetermined operation associated with one of the plurality of images in accordance with the tracked position of the at least one eye of the user.
15. An image processing method comprising:
   controlling a display to display a moving image associated with an event;
   tracking the position of at least one eye of a user viewing the displayed moving image;
   determining, based on the tracked position of the at least one eye of the user, when the user's gaze leaves the displayed moving image and when the user's gaze returns to the displayed moving image; and
   in response to the determining that the user's gaze has left the displayed moving image, controlling the display to pause the displayed moving image and, in response to determining that the user's gaze has returned to the paused, displayed moving image, controlling the display to resume the paused, displayed moving image.
16. An image processing method comprising:
   controlling a display to display an image associated with an event;
   tracking the position of at least one eye of a user viewing the displayed image;
   determining, based on the tracked position of the at least one eye of the user, a portion of the displayed image at which the user is looking;
   receiving a predetermined user input from the user; and
   in response to receiving the predetermined user input from the user, controlling the display to enlarge the determined portion of the displayed image at which the user is looking.
17. An image processing method comprising:
   controlling a display to display an image of a soccer pitch;
   tracking the position of at least one eye of a user viewing the displayed image;
   determining, based on the tracked position of the at least one eye of the user, a position along the soccer pitch of the displayed image at which the user is looking;
   receiving a predetermined user input from the user; and
   in response to receiving the predetermined user input from the user, controlling the display to display a visual indicator of an offside line at the determined position along the soccer pitch at which the user is looking.
18. A program for controlling a computer to perform a method according to any one of clauses 14 to 17.
19. A non-transitory storage medium storing a program according to clause 18.
20. An image processing apparatus comprising:
   display circuitry configured to control a display to simultaneously display a plurality of live moving images of an event each captured by a respective camera in real time;
   eye tracking circuitry configured to track the position of at least one eye of a user viewing the displayed plurality of moving images; and
   processor circuitry configured to perform a predetermined operation associated with one of the plurality of moving images in accordance with the tracked position of the at least one eye of the user; wherein:
      the eye tracking circuitry is configured to determine, based on the tracked position of the at least one eye of the user, when the user has been looking at one of the plurality of moving images for more than a predetermined time period, and
      in response to the eye tracking circuitry determining that the user has been looking at one of the plurality of moving images for more than the predetermined time period, the processor circuitry is configured to generate a signal to notify the user that they have been looking at the one of the plurality of moving images for more than the predetermined period of time; and
      the eye tracking circuitry is configured to determine, based on the tracked position of the at least one eye of the user, when the user's gaze leaves the displayed moving images and when the user's gaze returns to the displayed moving images; and
      the processor circuitry is configured, in response to the eye tracking circuitry determining that the user's gaze has left the displayed moving images, to control the display circuitry to control the display to pause the displayed moving images and, in response to the eye tracking circuitry determining that the user's gaze has returned to the paused, displayed moving images, to control the display circuitry to control the display to resume the paused, displayed moving images at a faster speed than the speed at which the moving images are displayed in real time until a time at which an elapsed time of the displayed moving images matches an elapsed time of the live moving images of the event captured by the respective cameras.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An image processing apparatus comprising:
display circuitry configured to control a display to simultaneously display a plurality of images associated with an event;
eye tracking circuitry configured to track the position of at least one eye of a user viewing the displayed plurality of images; and
processor circuitry configured to perform a predetermined operation associated with one of the plurality of images in accordance with the tracked position of the at least one eye of the user.

2. An image processing apparatus according to claim 1, comprising user interface circuitry configured to receive a predetermined input from the user, wherein:
the display circuitry is configured to control the display to display a first image of the plurality of images is displayed in a first area of the display and a second image of the plurality of images is displayed in a second area of the display;
the eye tracking circuitry is configured, based on the tracked position of the at least one eye of the user, to determine a second image displayed in the second area of the display at which the user is looking; and
in response to the user interface circuitry receiving the predetermined input from the user, the processor circuitry is configured to control the display circuitry to control the display to display the second image at which the user is looking in the first area of the display in place of the first image.

3. An image processing apparatus according to claim 1 or 2, wherein:
the eye tracking circuitry is configured to determine, based on the tracked position of the at least one eye of the user, when the user has been looking at one of the plurality of images for more than a predetermined time period; and
in response to the eye tracking circuitry determining that the user has been looking at one of the plurality of images for more than the predetermined time period, the processor circuitry is configured to generate a signal to notify the user that they have been looking at the one of the plurality of images for more than the predetermined period of time.

4. An image processing apparatus according to claim 3, wherein the signal controls the display circuitry to control the display to display a visual indicator indicating to the user that they have been looking at the one of the plurality of images for more than the predetermined period of time.

5. An image processing apparatus according to claim 4, wherein the visual indicator comprises visually distinguishing the one of the plurality of images that the user has been looking at with respect to the other one or more images of the plurality of images.

6. An image processing apparatus according to any preceding claim, comprising a receiver configured to receive an image signal from each of a plurality of cameras and a transmitter configured to transmit a notification signal to each of the plurality of cameras, wherein each of the displayed plurality of images is generated based on an image signal received from a respective one of the plurality of cameras; wherein:
a first image of the displayed plurality of images is an image to be distributed to an audience;
the eye tracking circuitry is configured, based on the tracked position of the at least one eye of the user, to determine when the user is looking at a second image of the displayed plurality of images; and
in response to the eye tracking circuitry determining that the user is looking at the second image, the processor circuitry is configured to control the transmitter to transmit a notification signal to the camera from which the image signal on the basis of which the second image is generated is received, the notification signal being for notifying an operator of the camera that the second image generated based on the image signal received from the camera is to potentially be distributed to an audience in place of the first image.

7. An image processing apparatus according to claim 6, wherein:
the eye tracking circuitry is configured to determine when the user has been looking at the second image for more than a predetermined time period; and
the processor circuitry is configured to control the transmitter to transmit the notification signal to the camera from which the image signal on the basis of which the second image is received in response to the eye tracking circuitry determining that the user has been looking at the second image for more than the predetermined period of time.

8. An image processing apparatus according to claim 6 or 7, comprising user interface circuitry configured to receive a predetermined input from the user, wherein, in response to the user interface circuitry receiving the predetermined input from the user, the processor circuitry is configured:
to control the transmitter to transmit a further notification signal to the camera from which the image signal on the basis of which the second image is generated is received, the notification signal being for notifying the operator of the camera that the second image generated based on the image signal received from the camera is to be distributed to an audience in place of the first image; and
to control the second image to be distributed to an audience in place of the first image.

9. An image processing apparatus according to claim 1, wherein:
each of the displayed plurality of images is a live moving image of the event captured by a respective camera in real time;
the eye tracking circuitry is configured to track the position of the at least one eye of the user viewing the displayed moving images, the eye tracking circuitry being configured to determine, based on the tracked position of the at least one eye of the user, when the user's gaze leaves the displayed moving images and when the user's gaze returns to the displayed moving images; and
the processor circuitry is configured, in response to the eye tracking circuitry determining that the user's gaze has left the displayed moving images, to control the display circuitry to control the display to pause the displayed moving images and, in response to the eye tracking circuitry determining that the user's gaze has returned to the paused, displayed moving images, to control the display circuitry to control the display to resume the paused, displayed moving images at a faster speed than the speed at which the moving images are displayed in real time until a time at which an elapsed time of the displayed moving images matches an elapsed time of the live moving images of the event captured by the respective cameras.

10. An image processing apparatus comprising:
display circuitry configured to control a display to display a moving image associated with an event;
eye tracking circuitry configured to track the position of at least one eye of a user viewing the displayed moving image, the eye tracking circuitry being configured to determine, based on the tracked position of the at least one eye of the user, when the user's gaze leaves the displayed moving image and when the user's gaze returns to the displayed moving image; and
processor circuitry configured, in response to the eye tracking circuitry determining that the user's gaze has left the displayed moving image, to control the display circuitry to control the display to pause the displayed moving image and, in response to the eye tracking circuitry determining that the user's gaze has returned to the paused, displayed moving image, to control the display circuitry to control the display to resume the paused, displayed moving image.

11. An image processing apparatus according to claim 10:
the displayed moving image is a live moving image of the event captured by a camera in real time;
in response to the eye tracking circuitry determining that the user's gaze has returned to the paused, displayed moving image, the processor circuitry is configured to control the display circuitry to control the display to resume the paused, displayed moving image at a faster speed than the speed at which the moving image is displayed in real time until a time at which an elapsed time of the displayed moving image matches an elapsed time of the live moving image of the event captured by the camera.

12. An image processing apparatus comprising:
display circuitry configured to control a display to display an image associated with an event;
eye tracking circuitry configured to track the position of at least one eye of a user viewing the displayed image, the eye tracking circuitry being configured to determine, based on the tracked position of the at least one eye of the user, a portion of the displayed image at which the user is looking;
user interface circuitry configured to receive a predetermined user input from the user; and
processor circuitry configured, in response to the user interface circuitry receiving the predetermined user input from the user, to control the display circuitry to control the display to enlarge the portion of the displayed image at which the user is looking as determined by the eye tracking circuitry.

13. An image processing apparatus comprising:
display circuitry configured to control a display to display an image of a soccer pitch;
eye tracking circuitry configured to track the position of at least one eye of a user viewing the displayed image, the eye tracking circuitry being configured to determine, based on the tracked position of the at least one eye of the user, a position along the soccer pitch of the displayed image at which the user is looking;
user interface circuitry configured to receive a predetermined user input from the user; and
processor circuitry configured, in response to the user interface circuitry receiving the predetermined user input from the user, to control the display to display a visual indicator of an offside line at the position along the soccer pitch at which the user is looking as determined by the eye tracking circuitry.

14. An image processing method comprising:
controlling a display to simultaneously display a plurality of images associated with an event;
tracking the position of at least one eye of a user viewing the displayed plurality of images; and
performing a predetermined operation associated with one of the plurality of images in accordance with the tracked position of the at least one eye of the user.

15. A program for controlling a computer to perform a method according to claim 14.
